# EUROPÄISCHE PATENTANMELDUNG

(11) **EP 1 430 977 A2**
(43) Veröffentlichungstag der Anmeldung: **23.06.2004**
(21) Anmeldenummer: 03090418.9
(22) Anmeldetag: 03.12.2003
(51) Int. Cl.: B23B 3/06

(54) **Mittenantriebs-Drehmaschine**

(30) Priorität: 20.12.2002 DE 10260906
(71) Anmelder: Werkzeugmaschinenbau Sinsheim GmbH, 74889 Sinsheim (DE)
(72) Erfinder: Hoffmann, Hans-Otto, 74889 Sinsheim-Hoffenheim (DE); Tunkel, Franz, 35394 Giessen (DE)
(74) Vertreter: Seewald, Jürgen, Dipl.-Ing.

(57) **Zusammenfassung**

Die vorliegende Erfindung betrifft eine Mittenantriebs-Drehmaschine mit zwei Mittenantriebsköpfen und mindestens einem jedem Mittenantriebskopf zugeordneten Kreuzschlitten, wobei die Mittenantriebsköpfe und die Kreuzschlitten auf zueinander parallelen Führungsbahnen verfahrbar sind und in die wechselseitigen, axialen Bewegungsbahnen hineinragen. Aufgabe der Erfindung ist es, kleinere Mittenantriebs-Drehmaschinen dieser Art dahingehend zu verbessern, dass ihre Bearbeitungsmöglichkeiten erweitert werden, insbesondere die Bearbeitung von sehr kurzen als auch langen Werkstücken möglich ist. Gelöst wird diese Aufgabe dadurch, dass nur ein Mittenantriebskopf (18) einen Eigenantrieb besitzt, und der andere, nicht angetriebene Mittenantriebskopf (19) aus seiner Arbeitsstellung in eine Ruhestellung verschwenkbar ist, in der er und der mindestens eine zugeordnete Kreuzschlitten (14, 15) auf den parallelen Führungsbahnen (9 - 11) aneinander vorbei fahrbar sind.

## Beschreibung

Die vorliegende Erfindung betrifft eine Mittenantriebs-Drehmaschine mit zwei Mittenantriebsköpfen und mindestens einem jedem Mittenantriebskopf zugeordneten Kreuzschlitten, wobei die Mittenantriebsköpfe und die Kreuzschlitten auf zueinander parallelen Führungsbahnen verfahrbar sind und in die wechselseitigen, axialen Bewegungsbahnen hineinragen.

Eine derartige Mittenantriebs-Drehmaschine ist aus EP 1 034 881 A1 bekannt. Sie besitzt zwei parallel zueinander angeordnete Fahrbahnen. Auf der einen Fahrbahn sind zwei Kreuzschlitten und auf der anderen Fahrbahn zwei Mittenantriebsköpfe verfahrbar. Die Mittenantriebsköpfe sind beide angetrieben. Die relativen Positionen der Mittenantriebsköpfe und der Kreuzschlitten zueinander sind variabel einstellbar, in dem die Mittenantriebsköpfe und die Kreuzschlitten auf den parallelen Führungsbahnen aneinander vorbeifahrbar sind. Aufgrund dieser Variabilität der Relativpositionen zwischenden Kreuzschlitten und den Mittenantriebsköpfen sind auf diese Maschine vielfältige Bearbeitungsmöglichkeiten von Werkstücken realisierbar. So können lange Werkstücke gleichzeitig in beide Mittenantriebsköpfe eingespannt werden, wobei eine gleichzeitige Enden- oder Oberflächenbearbeitung möglich ist. Durch Einspannen eines kurzen Werkstücks in einen der beiden angetriebenen Mittenantriebsköpfe kann dieses gleichzeitig an beiden Enden bearbeitet werden.

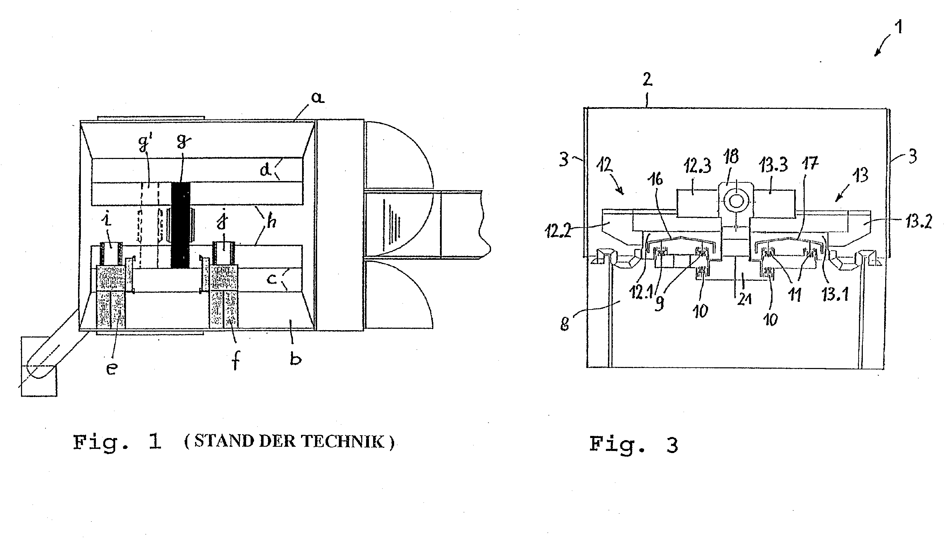

Neben relativ großen Mittenantriebs-Drehmaschinen, wie die in EP 1 034 881 A1 offenbarte, gehören kleinere Mittenantriebs-Drehmaschinen zum Stand der Technik, wie sie z. B. in dem Prospekt "Die neue Drehmaschinengeneration Baureihe C 200" der Werkzeugmaschinenbau Sinsheim GmbH dargestellt und beschrieben sind. Fig. 1 zeigt eine schematische Draufsicht auf eine derartige Maschine. In einem Maschinengehäuse a ist ein Bett b mit zwei Führungsbahnen c und d angeordnet. Auf der Führungsbahn c sind zwei Kreuzschlitten e und f in Maschinenlängsrichtung verfahrbar. Zwischen den Kreuzschlitten e und f ist ein Mittenantriebskopf g angeordnet. Dieser dient dem Einspannen und dem Antrieb eines kurzen Werkstücks, welches mit den Werkzeugen der Kreuzschlitten e und f gleichzeitig an beiden Enden bearbeitet werden kann. Der Mittenantriebskopf g kann stationär angeordnet, aber auch in Maschinenlängsrichtung verfahrbar sein. In letzterem Falle ist eine weitere Führungsbahn h vorgesehen, so dass dann insgesamt ein 6-Bahnen-Bett vorliegt.

Wie aus Fig. 1 hervorgeht, ist bei derartig kleinen Mittenantriebs-Drehmaschinen die Erstreckung des Mittenantriebskopfes g bzw. die Erstreckung der Führungsbahnen i und j der Planschlitten der Kreuzschlitten e und f quer zur Längsachse der Mittenantriebs-Drehmaschine so groß, dass diese sich überlappen, d.h. in die wechselseitigen axialen Bewegungsbahnen hineinragen. Der Mittenantriebskopf g ist somit sozusagen zwischen den Kreuzschlitten e und f "gekammert", das heißt mit anderen Worten, die Kreuzschlitten e und f sowie der Mittenantriebskopf g sind nicht aneinander vorbeifahrbar. Dies ist kein Nachteil, solange nur kurze Werkstücke, die mit ihren Enden beidseitig aus dem Mittenantriebskopf g herausragen, an ihren Enden gleichzeitig bearbeitet werden sollen.

Unabhängig von einer stationären oder verfahrbaren Anordnung des Mittenantriebskopfes g ist mit der Anordnung gemäß Fig. 1 eine Bearbeitung langer Werkstücke nicht möglich. Dieser Mangel könnte dadurch abgestellt werden, dass ein zweiter Mittenantriebskopf g' vorgesehen wird, der in Fig. 1 gestrichelt eingezeichnet ist. Je nach dem eingestellten Abstand zwischen den beiden Mittenantriebsköpfen g und g' könnten dann mehr oder weniger lange Werkstücke an ihren Enden gleichzeitig bearbeitet werden. Allerdings würde dieser Vorteil dadurch erkauft werden, dass sehr kurze Werkstücke nun nicht mehr gleichzeitig endenbearbeitet werden können, auch wenn die beiden Mittenantriebsköpfe g und g' ganz eng zusammengefahren werden würden, da die Enden der Werkstücke dann nicht mehr beidseitig aus den Mittenantriebsköpfen g und g' herausragen.

Aufgabe der vorliegenden Erfindung ist es, kleinere Mittenantriebs-Drehmaschinen der oben im Stand der Technik beschriebenen Art dahingehend zu verbessern, dass ihre Bearbeitungsmöglichkeiten erweitert werden, insbesondere die Bearbeitung von sehr kurzen als auch langen Werkstücken möglich ist.

Erfindungsgemäß wird diese Aufgabe mit einer Mittenantriebs-Drehmaschine der eingangs genannten Art gelöst, die zusätzlich die Merkmale des Kennzeichens des Anspruchs 1 aufweist.

Der Terminus "nicht angetriebener Mittenantriebskopf" ist im Sinne der vorliegenden Erfindung so zu verstehen, dass er keinen Eigenantrieb besitzt, sondern über den, einen eigenen Antrieb besitzenden Mittenantriebskopf und das eingespannte Werkzeug mitgenommen wird. Er hat somit gewissermaßen die Funktion einer Lünette.

Aufgrund der Verschwenkbarkeit des nicht angetriebenen Mittenantriebskopfes aus seiner Arbeitsstellung, in der er rechtwinklig zu den Führungsbahnen angeordnet ist, in seine Ruhestellung, kommt er aus dem Kollisionsbereich mit den Kreuzschlitten, so dass diese und der in Ruhestellung befindliche Mittenantriebskopf auf den Führungsbahnen aneinander vorbeifahrbar sind. Es ist sinnvoll, wenn der nicht angetriebene Mittenantriebskopf in seiner Ruhestellung parallel zu den Führungsbahnen steht, also um 90° schwenkbar ist. Es sind natürlich auch kleinere Schwenkwinkel möglich, solange die angesprochene Verfahrbarkeit nicht beeinträchtigt wird. Durch die Verschwenkbarkeit des nicht angetriebenen Mittenantriebskopfes erhöhen sich die Bearbeitungsmöglichkeiten der Mittenantriebs-Drehmaschine beträchtlich. So können auf diese Maschine sowohl sehr kurze Werkstücke bearbeitet werden, in dem der nicht angetriebene Mittenantriebskopf in seine Ruhestellung geschwenkt wird, das kurze Werkstück in den angetriebenen Mittenantriebskopf eingespannt und die mindestens zwei Kreuzschlitten dem angetriebenen Mittenantriebskopf zur Endenbearbeitung des eingespannten Werkstücks zugestellt werden. Des weiteren können auf diese Maschine unterschiedlich lange Werkstücke endenbearbeitet werden, in dem die beiden Mittenantriebsköpfe zwischen den Kreuzschlitten entsprechend weit auseinander gefahren werden. Darüber hinaus ist auch eine Oberflächenbearbeitung eines langen Werkstücks zwischen den beiden Mittenantriebsköpfen möglich, in Mittenantriebsköpfen möglich, in dem der nicht angetriebene Mittenantriebskopf zunächst in seine Ruhestellung geschwenkt, dann einer der Kreuzschlitten in eine Position zwischen den beiden Antriebsköpfen verfahren und anschließend der nicht angetriebene Mittenantriebskopf wieder aus seiner Ruhestellung in seine Arbeitsstellung zurückgeschwenkt wird.

Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 2: eine schematische Draufsicht auf eine erfindungsgemäße Mittenantriebs-Drehmaschine,
- Fig. 3: einen Schnitt A-A gemäß Fig. 2,
- Fig. 4: schematisch fünf verschiedene, in den Fig. 4.1 - 4.5 dargestellte Maschinenpositionen,
- Fig. 5: eine Seitenansicht des nicht angetriebenen Mittenantriebskopfes, und
- Fig. 6: eine Vorderansicht der Darstellung gemäß Fig. 5.

Die in der Zeichnung dargestellte Mittenantriebs-Drehmaschine 1 besitzt ein Gehäuse 2, welches mit Türen 3 ausgestattet ist, die einen Zugang zur eigentlichen Bearbeitungseinheit gestatten. Die Türen 3 dienen dem Spritzschutz gegen Kühl- und Schmierflüssigkeit sowie gegen Späne und dem weiteren Arbeitsschutz, um eine Berührung des Bedieners mit bewegten Teilen der Maschine zu verhindern. An einer Stirnseite des Gehäuses 2 ragt ein Tragarm 4 vom Gehäuse ab, der ein Bedienpult 5 trägt. Auf der gegenüberliegenden Stirnseite ist die Mittenantriebs-Drehmaschine 1 mit einem Schaltschrank 6 ausgestattet. An dieser Stirnseite folgt auch eine Abfuhr der bei der Bearbeitung von Werkstücken erzeugten Späne. Dazu ist ein Späneförderer 7 vorgesehen.

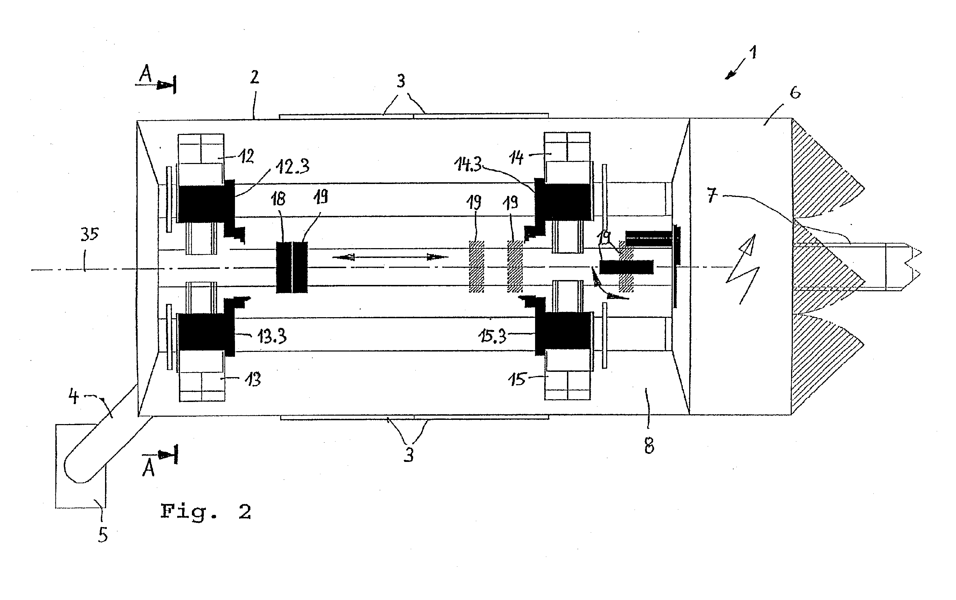

Die Mittenantriebs-Drehmaschine 1 besitzt ein Maschinenbett 8 mit drei Führungsbahnen 9, 10 und 11. Auf den beiden äußeren Führungsbahnen 9 und 11 laufen vier Kreuzschlitten 12 - 15, die sich jeweils aus einem Bettschlitten 12.1 - 15.1 und einem Planschlitten 12.2 - 15.2 zusammensetzen. Supporte 12.3 - 15.3 der Planschlitten 12.2 - 15.2 tragen die Werkzeuge zur Bearbeitung von Werkstücken, die in Fig. 2 schematisch angedeutet sind.

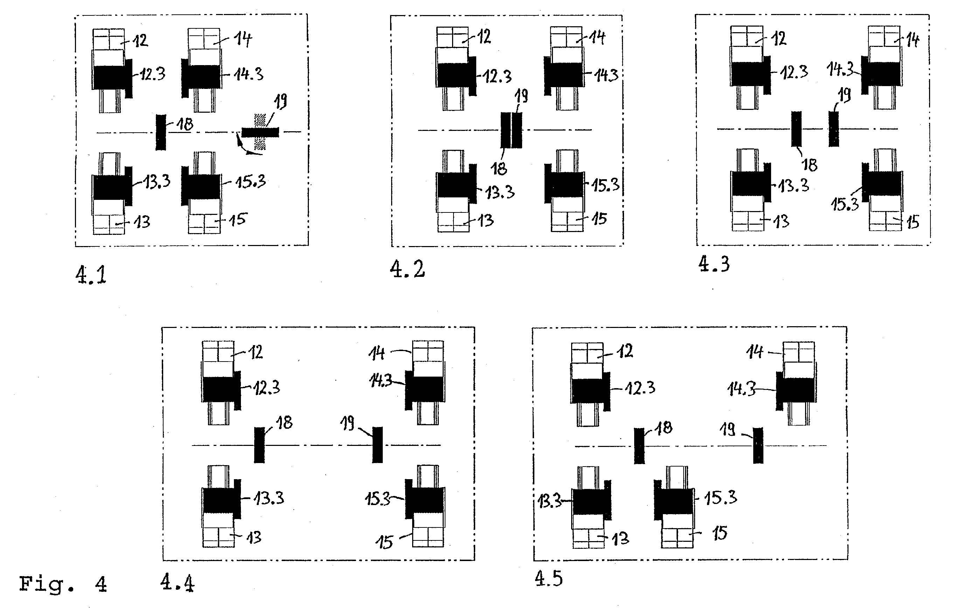

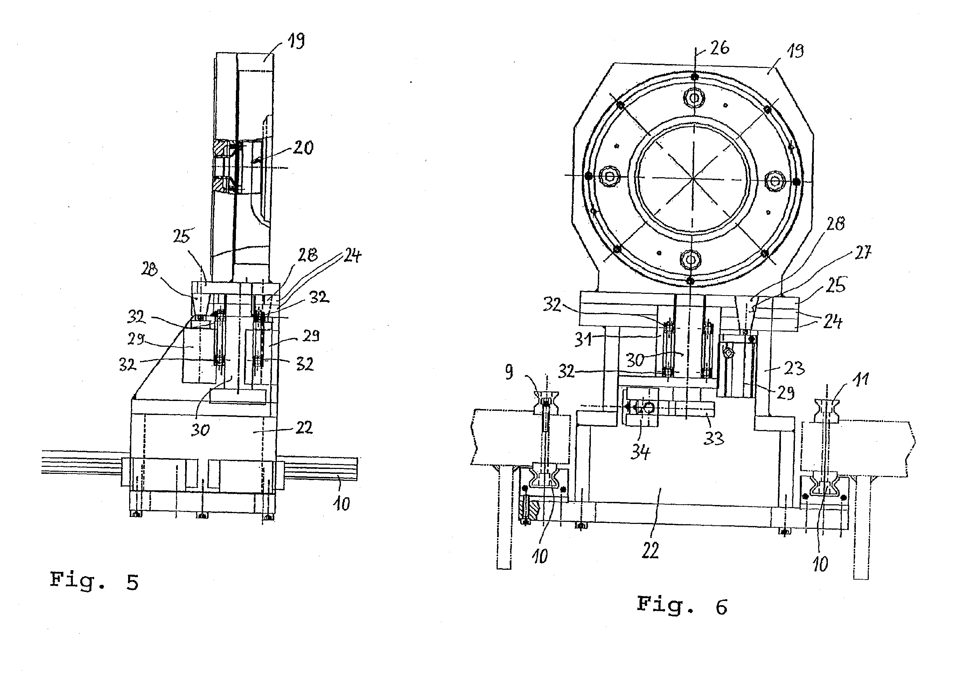

Die Führungsbahnen 9 und 11 sind mit dachförmigen Überbauten 16 und 17 versehen, um sie gegen Verschmutzungen zu schützen. Ein derartiger Schutz ist für die mittlere Führungsbahn 10 nicht erforderlich, da diese unter den Führungsbahnen 9 und 10 hängt und damit wirksam gegen Verschmutzung geschützt ist. Auf der Führungsbahn 10 sind zwei Mittenantriebsköpfe 18, 19 angeordnet. Der Mittenantriebskopf 18 besitzt einen eigenen Antrieb sowie eine Spannzange 20, wie sie aus Fig. 5 hervorgeht, zum Einspannen von Werkstücken. Antrieb und Spannzange sind aus dem Stand der Technik bekannt und werden daher hier nicht näher erläutert. Durch den Antrieb des Mittenantriebskopfes 18 werden zu bearbeitende Werkstücke in Rotationsbewegung gebracht. Je nach Art seines Antriebes kann der Mittenantriebskopf 18 auf der Fahrbahn 10 stationär oder aber auch verfahrbar angeordnet sein. Im Falle seiner Verfahrbarkeit besitzt er einen Bettschlitten 21, wie in Fig. 3 dargestellt.

Der Mittenantriebskopf 19, der detaillierter in den Fig. 5 und 6 dargestellt ist, besitzt keinen eigenen Antrieb, jedoch eine Spannzange 20 zum Einspannen von Werkstücken. Er ist aus seiner Arbeitsstellung, in der er senkrecht zu den Führungsbahnen 9 - 11 ausgerichtet, in eine Ruhestellung schwenkbar, in der er parallel zu den Führungsbahnen 9 - 11 steht. Diese Ruhestellung (schwarzes Rechteck) ist in Fig. 2 in unmittelbarer Nachbarschaft zum Schaltschrank 6 dargestellt.

Der Mittenantriebskopf 19 ist auf der Fahrbahn 10 verfahrbar und ist dazu mit einem Bettschlitten 22 ausgestattet. Dieser Bettschlitten 22 trägt ein Gestell 23, dessen oberen Abschluss 2 Platten 24 bilden, die starr mit den übrigen Teilen des Gestells 23 verbunden sind. Auf diesen beiden Platten 24 ist eine Basisplatte 25 gelagert, die starr mit dem Mittenantriebskopf 19 verbunden ist. Die Platten 25 und 24 besitzen zwei sich, bezogen auf die Mittelachse 26 des Mittenantriebskopfes 19, diametral gegenüberliegende Kegelbohrungen 27, die in der Ruhestellung und in der Arbeitsstellung des Mittenantriebskopfes 19 miteinander fluchten. Diese Kegelbohrungen 27 nehmen Kegelstifte 28 in der Ruhestellung und in der Arbeitsstellung des Mittenantriebskopfes 19 formschlüssig auf. Die Kegelstifte 28 sind jeweils mit dem Kolben eines Hydraulikzylinders 29 verbunden.

Der Mittenantriebskopf 19 bzw. seine Basisplatte 25 ist starr mit einer Schwenkwelle 30 verbunden, die in einer Buchse 31 des Gestells 23 über zwei Kugellager 32 drehbar gelagert ist. Das untere Ende der Schwenkwelle 30 ist mit einer aus der Zeichnung nicht ersichtlichen Verzahnung ausgestattet, die mit einer Zahnstange 33 kämmt. Diese Zahnstange 33 ist gleichzeitig Bestandteil des Kolbens eines weiteren Hydraulikzylinders 34.

Die Fig. 5 und 6 zeigen den Mittenantriebskopf 19 in seiner Arbeitsposition. Soll er aus dieser Position in seine Ruheposition überführt, d.h. um 90° geschwenkt werden, werden zunächst die beiden Hydraulikzylinder 29 betätigt, so dass sich die Kegelstifte 28 nach oben bewegen, also ihren Formschluss mit den Platten 25 und 24 aufheben. Nun wird der Hydraulikzylinder 34 betätigt, wodurch der Mittenantriebskopf 19 über seine Schwenkwelle 30 verschwenkt wird. Bei dieser Schwenkbewegung laufen die Kegelstifte 28 in in der Basisplatte 25 ausgesparten Kreisbahnen bis in die nächste Überdeckungsstellung der Kegelbohrungen 27 in den Platten 25 und 24. Die Zylinder 29 werden in dieser Stellung wieder betätigt, so dass die Zylinderstifte 28 nach unten in Formschluss mit den Kegelbohrungen 27 gezogen werden. Dadurch erfolgt eine feste Verspannung des Mittenantriebskopfes 19 auf seinem Gestell 23. Aufgrund des Formschlusses zwischen den Kegelstiften 28 und den Kegelbohrungen 27 nimmt der Mittenantriebskopf 19 reproduzierbar seine Arbeitsstellung bzw. seine Ruhestellung ein, was für eine genaue Bearbeitung von Werkstücken erforderlich ist.

Aus Fig. 3, insbesondere aber aus Fig. 2 geht hervor, dass die Erstreckungen der Mittenantriebsköpfe 18, 19 bzw. auch der Kreuzschlitten 12-15 quer zur Mittelachse 35 der Mittenantriebs-Drehmaschine 1 so groß sind, dass sie sich überlappen, d.h., die Kreuzschlitten 12-15 ragen in die axialen Bewegungsbahnen der Mittenantriebsköpfe 18, 19 hinein und umgekehrt. Dadurch sind die beiden Mittenantriebsköpfe 18, 19 gewissermaßen zwischen den Kreuzschlitten 12 - 15 gekammert. Sie sind zwar innerhalb dieser "Kammerung" auf der Führungsbahn 10 verschiebbar, was in Fig. 2 durch die beiden schraffiert dargestellten Positionen des Mittenantriebskopfes 19 links von den beiden Kreuzschlitten 14, 15 angedeutet ist. Die beiden in Fig. 2 rechts von den Kreuzschlitten 14, 15 angedeuteten Positionen des Mittenantriebskopfes 19 (schwarzes Rechteck - Ruhestellung; schraffiertes Rechteck - Arbeitsstellung) sind jedoch nur möglich, da der Mittenantriebskopf 19, wie beschrieben, aus seiner Arbeitstellung um 90° in eine Ruhestellung schwenkbar ist und umgekehrt.

Aufgrund dieser Ausbildung der Mittenantriebs-Drehmaschine 1 erhöhen sich deren Bearbeitungsmöglichkeiten gegenüber herkömmlichen Maschinen erheblich. Diese Möglichkeiten werden nachstehend anhand von Fig. 4 erläutert.

In den Fig. 4.2, 4.3 und 4.4 ist die Endenbearbeitung verschieden langer Werkstücke bei Kammerung der Mittenantriebsköpfe 18, 19 zwischen den Kreuzschlitten 12-15 dargestellt. Ein Werkstück ist dabei in beide Mittenantriebsköpfe 18, 19 eingespannt. Fig. 4.2 zeigt die beiden Mittenantriebsköpfe 18, 19 dicht zusammengefahren, so dass kurze Werkstücke bearbeitet werden können. In Fig. 4.3 sind die Mittenantriebsköpfe 18, 19 etwas weiter auseinandergefahren, so dass längere Werkstücke endbearbeitet werden können. Fig. 4.4 zeigt die Endbearbeitung sehr langer Werkstücke, wozu die Mittenantriebsköpfe 18, 19 sehr weit auseinandergefahren sind.

Sehr kurze Werkstücke können bei der Anordnung gemäß Fig. 4.2 nicht bearbeitet werden, da ihre Enden nicht beidseitig aus den beiden zusammengefahrenen Mittenantriebsköpfen 18, 19 herausragen. Um eine Endenbearbeitung von sehr kurzen Werkstücken zu ermöglichen, welche dann nur in den angetriebenen Mittenantriebskopf 18 eingespannt sind, wird der Mittenantriebskopf 19 aus seiner Arbeitsstellung um 90° in seine Ruhestellung geschwenkt und an den beiden ihm zugeordneten Kreuzschlitten 14, 15 vorbeigefahren oder umgekehrt.

Fig. 4.5 zeigt eine weitere Bearbeitungsmöglichkeit, die darin besteht, dass ein langes, in die beiden Mittenantriebsköpfe 18, 19 eingespanntes Werkstück gleichzeitig an beiden Enden und zwischen den Mittenantriebsköpfen 18, 19 bearbeitet werden kann. Diese Bearbeitungsposition wird dadurch erreicht, dass der Mittenantriebskopf 19 zunächst in seine Ruheposition, dann der Kreuzschlitten an dem in Ruheposition befindlichen Mittenantriebskopf 19 vorbeigefahren und anschließend der Mittenantriebskopf 19 wieder in seine Arbeitsposition zurückgeschwenkt wird.

## Patentansprüche

1. Mittenantriebs-Drehmaschine mit zwei Mittenantriebsköpfen und mindestens einem jedem Mittenantriebskopf zugeordneten Kreuzschlitten, wobei die Mittenantriebsköpfe und die Kreuzschlitten auf zueinander parallelen Führungsbahnen verfahrbar sind und in die wechselseitigen, axialen Bewegungsbahnen hineinragen, **dadurch gekennzeichnet, dass** nur ein Mittenantriebskopf (18) einen Eigenantrieb besitzt, und der andere, nicht angetriebene Mittenantriebskopf (19) aus seiner Arbeitsstellung in eine Ruhestellung verschwenkbar ist, in der er und der mindestens eine zugeordnete Kreuzschlitten (14, 15) auf den parallelen Führungsbahnen (9 - 11) aneinander vorbeifahrbar sind.

2. Mittenantriebs-Drehmaschine nach Anspruch 1, **dadurch gekennzeichnet, dass** zwischen dem nicht angetriebenen Mittenantriebskopf (19) und seinem Gestell (23) Formschlusselemente (27, 28) vorgesehen sind, die den Mittenantriebskopf (19) in seiner Arbeitsstellung und seiner Ruhestellung reproduzierbar arretieren.

3. Mittenantriebs-Drehmaschine nach Anspruch 2, **dadurch gekennzeichnet, dass** die Formschlusselemente (28) durch Pneumatik oder Hydraulikzylinder (29) betätigbar sind.
